# EUROPEAN PATENT APPLICATION

(11) **EP 4 276 068 A1**
(43) Date of publication of application: **15.11.2023**
(21) Application number: 22736578.0
(22) Date of filing: 07.01.2022
(51) Int. Cl.: C01B 39/04

(54) **ZSM-23 MOLECULAR SIEVE AND PREPARATION METHOD THEREFOR**

(30) Priority: 07.01.2021 CN 202110018642
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: CHEN, Yujing, Dalian, Liaoning 116045 (CN); FAN, Hongfei, Dalian, Liaoning 116045 (CN); YU, Zhengmin, Dalian, Liaoning 116045 (CN); SUN, Xiaoyan, Dalian, Liaoning 116045 (CN)
(74) Representative: Hoffmann Eitle
(86) International application number: PCT/CN2022/070636
(87) International publication number: WO 2022/148416

(57) **Abstract**

The present invention discloses a ZSM-23 zeolite and a process for preparing the same and use thereof. The total acid amount of said ZSM-23 zeolite is 0.05-0.25 mmol/g, preferably, 0.06-0.22 mmol/g, more preferably, 0.06-0.20 mmol/g; the strong acid content of said ZSM-23 zeolite is 5-33%, preferably, 7-33%, more preferably, 9-33%, or further preferably, 7-31%, further more preferably, 10-28% of the total acid amount; wherein the strong acid refers to an acid having a desorption temperature of 350°C or higher in an NH3 temperature programmed desorption (NH3-TPD). The ZSM-23 zeolite has a low strong acid content, and the preparation process of the ZSM-23 zeolite is simple.

## Description

### Technical Field

The present invention relates to a ZSM-23 zeolite and a preparation process and use thereof, specifically to a ZSM-23 zeolite with a low strong acid content and a preparation process and use thereof.

### Background Technology

ZSM-23 zeolite is a zeolite material with a high SiO₂/Al₂O₃ ratio and MTT topology structure, and its one-dimensional tear-drop-shaped porous channels are constituted with 10-member rings. With its unique porous channel structure and adjustable acid properties, ZSM-23 zeolite is widely used in the fields of separation, adsorption, and catalysis, playing an irreplaceable role. Especially in the petrochemical industry, it has shown outstanding performance in the hydrocracking of long-chain alkanes and olefins, the isomerization of alkanes and aromatic hydrocarbons, and the like. Therefore, preparing ZSM-23 zeolites with excellent performance is of great significance.

There are currently many preparation methods for ZSM-23 zeolite. US4076842 first disclosed a method for synthesizing a ZSM-23 zeolite by using pyrrolidine as a template agent. Subsequently, US4490342 and US5707601 successively disclosed the conditions for synthesizing ZSM-23 zeolites in a system in which bis-quaternary ammonium salt (diquat-7) or a small molecule amine and a neutral amine are used as the template agent. CN101214971 discloses a synthesis process for nano ZSM-23 zeolites. The reaction mixture made of an aluminum source, a silicon source, sodium hydroxide, and isopropylamine was hydrothermally crystallized to produce a ZSM-23 zeolite with an average diameter of crystal grain sections of not greater than 100nm. Patent CN101613114 disclosed a method for synthesizing ZSM-23 zeolites by using ZSM-22 or ZSM-23 zeolites as crystal seeds and using a small number of template agents such as ethylamine and n-butylamine. CN102897785 involved a step-by-step treatment, in which an organic template agent or aqueous solution thereof and an aluminum source were firstly mixed and treated in a closed reaction vessel at 50-190°C for a period of time; then a silicon source, an organic template agent, water, and a crystal seed were added thereto; and then the reaction system was hydrothermally crystallized at a high temperature to produce an HZSM-23 zeolite. CN102992346 also disclosed a process for synthesizing a ZSM-23 zeolite without any template agent, in which water and an aluminum source were mixed, a sodium source and a silicon source were added; the resulting mixture was stirred evenly, and a crystal seed was added; the reaction system was hydrothermally crystallized to produce the raw powder of ZSM-23 zeolite.

Among the publicly available technologies for ZSM-23 zeolites, the focus is mostly on exploring the synthesis of new templates, improving the structures of their porous channels, or reducing the production cost by improving the synthesis process. There are few methods available to regulate its acidity. An article (Journal of Catalysis, 1990, 121, 89-98) reported a method for increasing the weak acid content of ZSM-23 by the isomorphous replacement of Fe atoms with Al atoms. An article (Ind. Eng. Chem. Res. 2013, 52, 15359-15365) disclosed a method of adding an auxiliary MgO in the later stage to regulate the acidity distribution of ZSM-23 and thereby adjust its reaction performance. However, these technologies have a limited ability to regulate the acidity of zeolites, and the prepared ZSM-23 zeolite still has a relatively high strong acid content, which limits the use of the ZSM-23 zeolite in the field of shape-selective catalysis.

### Summary of the Invention

In order to overcome the shortcomings in the existing technology, the present invention provides a ZSM-23 zeolite and preparation process and use thereof. The ZSM-23 zeolite has a low strong acid content, and the preparation process of the ZSM-23 zeolite is simple.

The present invention relates to a ZSM-23 zeolite, the total acid amount of said ZSM-23 zeolite is 0.05-0.25 mmol/g, preferably, 0.06-0.22 mmol/g, more preferably, 0.06-0.20 mmol/g; the strong acid content of said ZSM-23 zeolite is 5-33%, preferably, 7-33%, more preferably, 9-33%, or further preferably, 7-31%, further more preferably, 10-28% of the total acid amount; wherein the strong acid refers to an acid having a desorption temperature of 350°C or higher in an NH3 temperature programmed desorption (NH3-TPD), wherein optionally said ZSM-23 zeolite is calcined or non-calcined. In the present invention, the ZSM-23 zeolite can refer to a product obtained by drying after the crystallization during the zeolite preparation (i.e., uncalcined), or a product obtained by drying and calcining after the crystallization during the zeolite preparation (i.e., calcined).

According to the above-mentioned ZSM-23 zeolite, the ZSM-23 zeolite has a grain size of 100-700 nm, preferably 200-600 nm, and further preferably 300-500 nm.

According to the above-mentioned ZSM-23 zeolite, said ZSM-23 zeolite has a SiO₂/Al₂O₃ molar ratio of 40-300, a specific surface area of 200-400 m²/g, and a pore volume of 0.25-0.50 cm³/g; preferably, said ZSM-23 zeolite has a SiO₂/Al₂O₃ molar ratio of 40-200 or 50-200, a specific surface area of 280-370 m²/g, and a pore volume of 0.28-0.40 cm³/g.

According to the above-mentioned ZSM-23 zeolite, said ZSM-23 zeolite has a relative crystallinity of 95-130%, and a relative crystallinity of 93-120% after a hydrothermal treatment with steam for 2 hours at 600°C; preferably a relative crystallinity of 98-120%, and a relative crystallinity of 95-115% after a hydrothermal treatment with steam for 2 hours at 600°C.

The present invention provides a process for preparing a ZSM-23 zeolite, which process comprises the following steps:
(1) A mixed solution containing a template agent, and an amorphous silica-alumina and/or amorphous silica-alumina precursor is prepared;
(2) An alkali source and a silicon source are added to the mixed solution of step (1);
(3) The material obtained in step (2) is crystallized (for example, statically crystallized, i.e., crystallized without stirring), optionally filtered and washed, dried, and optionally calcined to produce the ZSM-23 zeolite.

According to the above-mentioned process, in step (1), said template agent is one or more of isopropylamine, pyrrolidine, N,N-dimethyl formamide, and dimethylamine.

According to the above-mentioned process, in step (1), the amorphous silica-alumina and/or amorphous silica-alumina precursor is derived from an alkaline aluminum source (for example, an aluminate or a meta-aluminate, such as sodium aluminate, potassium aluminate, sodium meta-aluminate, and potassium meta-aluminate); in other words, the amorphous silica-alumina and/or amorphous silica-alumina precursor excludes strong acid groups, e.g. a sulfate group, a nitrate group and the like.

According to the above-mentioned process, in step (1), in said mixed solution, the molar ratio of silicon (as silica) : aluminum (as alumina) is 1:(0.10-0.85), preferably 1:(0.20-0.79), further preferably 1:(0.24-0.78); the molar ratio of said aluminum (as alumina) : the template agent is 1: (10-100), preferably 1:(15-85), further preferably 1:(20-65).

According to the above-mentioned process, in step (1), an amorphous silica-alumina precursor is prepared by carbonization method, and then a template agent is added to the amorphous silica-alumina precursor to produce the mixed solution.

The preparation process of an amorphous silica-alumina precursor according to a non-limiting embodiment of the present invention is as follows: preparing a solution of an aluminum source (i.e. an alkaline aluminum source, for example, an aluminate such as sodium aluminate and potassium aluminate, preferably sodium aluminate ) and a solution of a silicon-containing compound respectively; mixing the solution of the aluminum source with a part of the solution of the silicon-containing compound, introducing a CO₂ gas for gelatination, when the volume of the introduced CO₂ gas is 50-100%, preferably 70-90% of the total volume of the introduced CO₂ gas, adding the remaining part of the solution of the silicon-containing compound, and then introducing any remaining CO₂ gas, and optionally aging to produce the amorphous silica-alumina precursor.

In the above-mentioned preparation process of the amorphous silica-alumina precursor, the remaining part of the solution of silicon-containing compound as silica comprises 5-85wt%, preferably 30-70wt% of the total addition amount of the solution of silicon-containing compound as silica.

In the above-mentioned preparation process of the amorphous silica-alumina precursor, the reaction temperature of said gelatination is 10-40°C, preferably 15-35°C, the pH after the gelatination is controlled to 9-12.

In the above-mentioned preparation process of the amorphous silica-alumina precursor, said solution of the silicon-containing compound is water glass and/or a sodium silicate solution.

In the above-mentioned preparation process of the amorphous silica-alumina precursor, based on the mass of Al₂O₃, the concentration of the solution of the aluminum source is 15-60 gAl₂O₃/L, based on the mass of SiO₂, the concentration of said solution of the silicon-containing compound is 40-260 gSiO₂/L, the concentration of said CO₂ gas is 30-60 v%.

In the above-mentioned preparation process of the amorphous silica-alumina precursor, the time of said ageing is 5-60 minutes, preferably 10-30 minutes; the temperature of said aging is 10-40°C, preferably 15-35°C.

In step (1) of the above-mentioned process, said mixed solution is stirred at 10-35°C for 0.2-1.5 hours, preferably stirred at 10-25°C for 0.5-1 hours.

In step (2) of the above-mentioned process, based on the aluminum (as alumina) in the mixed solution of step (1), based on the total charging molar ratios of SiO₂:Al₂O₃:R₂O(an alkali source, wherein R is an alkali metal, such as sodium and potassium):H₂O = 1:(0.0025-0.025):(0.015-0.08):(30-80) and template agent (SDA)/SiO₂ = 0.10-1.8, preferably SiO₂/Al₂O₃ is 50-200, H₂O/SiO₂ is 30-60, and R₂O/SiO₂ is 0.025-0.06, the alkali source and the silicon source are added to step (1).

In step (2) of the above-mentioned process, said silicon source is one or more of fumed silica, silica sol and water glass, said alkali source is one or more of sodium hydroxide, potassium hydroxide, and ammonia water.

In step (3) of the above-mentioned process, the crystallization is performed at 150-200°C for 8-72 hours, preferably at 160-180°C for 10-48 hours; the drying is performed at 60-130°C for 2-12 hours, preferably at 80-120°C for 4-8 hours; the calcining is performed at 500-600°C for 2-8 hours, preferably at 530-570°C for 3-6 hours or 4-6 hours.

Specifically, the present invention discloses the following technical solutions:
1. A ZSM-23 zeolite, which is characterized in that the total acid amount of said ZSM-23 zeolite is 0.05-0.25 mmol/g, preferably, 0.06-0.22 mmol/g, more preferably, 0.06-0.20 mmol/g; the strong acid content of said ZSM-23 zeolite is 5-33%, preferably, 7-33%, more preferably, 9-33%, or further preferably, 7-31%, further more preferably, 10-28% of the total acid amount; wherein the strong acid refers to an acid having a desorption temperature of 350°C or higher in an NH3 temperature programmed desorption (NH3-TPD), wherein optionally said ZSM-23 zeolite is a dried and calcined zeolite.
2. The zeolite according to any of the previous solutions, which is characterized in that said ZSM-23 zeolite has an XRD pattern comprising the following characteristic peaks expressed by 2θ degree: about 11.3°+/-0.3° (for example +/-0.2° or +/-0.1°).
3. The zeolite according to any of the previous solutions, which is characterized in that said ZSM-23 zeolite has an XRD pattern comprising the following characteristic peaks expressed by 2θ degree: 11.2-11.5°, 19.5-19.9°, 20.7-21.0°, 22.8-23.1°.
4. The zeolite according to any of the previous solutions, which is characterized in that said ZSM-23 zeolite has a grain size of 100-700 nm, preferably 200-600 nm, and further preferably 300-500 nm.
5. The zeolite according to any of the previous solutions, which is characterized in that said ZSM-23 zeolite has a SiO₂/Al₂O₃ molar ratio of 35-300, a specific surface area of 200-400 m²/g, and a pore volume of 0.25-0.50 cm³/g; preferably, said ZSM-23 zeolite has a SiO₂/Al₂O₃ molar ratio of 38-200, a specific surface area of 280-370 m²/g, and a pore volume of 0.28-0.40 cm³/g.
6. The zeolite according to any of the previous solutions, which is characterized in that said ZSM-23 zeolite has a relative crystallinity of 95-130% after calcination, and a relative crystallinity of 93-120% after a hydrothermal treatment with steam for 2 hours at 600°C; preferably a relative crystallinity of 98-120% after calcination, and a relative crystallinity of 95-115% after a hydrothermal treatment with steam for 2 hours at 600°C.
7. A process for preparing said ZSM-23 zeolite according to any of the precedent solutions, which is characterized in that the process comprises the following steps:
   (1) A mixed solution containing a template agent, and an amorphous silica-alumina and/or amorphous silica-alumina precursor is prepared, preferably, the amorphous silica-alumina and/or amorphous silica-alumina precursor is derived from an alkaline aluminum source (for example, an aluminate or a meta-aluminate, such as sodium aluminate, potassium aluminate, sodium meta-aluminate, and potassium meta-aluminate);
   (2) An alkali source and a silicon source are added to the mixed solution of step (1);
   (3) The material obtained in step (2) is crystallized, optionally filtered and washed, dried, and optionally calcined to produce the ZSM-23 zeolite.
8. The process according to any of the previous solutions, which is characterized in that in step (1), said template agent is one or more of isopropylamine, pyrrolidine, N,N-dimethyl formamide, and dimethylamine.
9. The process according to any of the previous solutions, which is characterized in that in step (1), in said mixed solution, the molar ratio of silicon (as silica) : aluminum (as alumina) is 1:(0.10-0.85), preferably 1:(0.20-0.79), further preferably 1:(0.24-0.78); the molar ratio of said aluminum (as alumina) : the template agent is 1:(10-100), preferably 1:(15-85), further preferably 1:(20-65).
10. The process according to any of the previous solutions, which is characterized in that in step (1), an amorphous silica-alumina precursor is prepared by carbonization method, and then a template agent is added to the amorphous silica-alumina precursor to produce the mixed solution.
11. The process according to any of the previous solutions, which is characterized in that the preparation process of the amorphous silica-alumina precursor in step (1) is as follows: preparing a solution of aluminum source (such as aluminate, preferably sodium aluminate) and a solution of silicon-containing compound respectively; mixing the solution of aluminum source with a part of the solution of silicon-containing compound, introducing a CO₂ gas for gelatination, when the volume of the introduced CO₂ gas is 50-100%, preferably 70-90% of the total volume of the introduced CO₂ gas, adding the remaining part of the solution of silicon-containing compound, and optionally aging to produce the amorphous silica-alumina precursor.
12. The process according to any of the previous solutions, which is characterized in that the remaining part of the solution of silicon-containing compound as silica comprises 5-85wt%, preferably 30-70wt% of the total addition amount of the solution of silicon-containing compound as silica.
13. The process according to any of the previous solutions, which is characterized in that the reaction temperature of said gelatination is 10-40°C, preferably 15-35°C, and the pH after the gelatination is controlled to 9-12.
14. The process according to any of the previous solutions, which is characterized in that said solution of the silicon-containing compound is a water glass and/or a sodium silicate solution.
15. The process according to any of the previous solutions, which is characterized in that based on the mass of Al₂O₃, the concentration of the solution of the aluminum source is 15-60 gAl₂O₃/L, based on the mass of SiO₂, the concentration of said solution of the silicon-containing compound is 40-260 gSiO₂/L, the concentration of said CO₂ gas is 30-60 v%.
16. The process according to any of the previous solutions, which is characterized in that the time of said aging is 5-60 minutes, preferably 10-30 minutes; the temperature of said aging is 10-40°C, preferably 15-35°C.
17. The process according to any of the previous solutions, which is characterized in that in step (1), the mixed solution is stirred at 10-35°C for 0.2-1.5 hours, preferably stirred at 10-25°C for 0.5-1 hours.
18. The process according to any of the previous solutions, which is characterized in that in step (2), based on the aluminum (as alumina) in the mixed solution of step (1), based on the total charging molar ratios of SiO₂:Al₂O₃:R₂O(an alkali source, wherein R is an alkali metal, such as sodium and potassium):H₂O = 1:(0.0025-0.025):(0.015-0.08):(30-80) and template agent (SDA)/SiO₂ = 0.10-1.8, preferably SiO₂/Al₂O₃ is 50-200, H₂O/SiO₂ is 30-60, and R₂O/SiO₂ is 0.025-0.06, the alkali source and the silicon source are added to step (1).
19. The process according to any of the previous solutions, which is characterized in that in step (2), said silicon source is one or more of fumed silica, silica sol, and water glass, said alkali source is one or more of sodium hydroxide, potassium hydroxide, and ammonia water.
20. The process according to any of the previous solutions, which is characterized in that in step (3), the crystallization is performed at 150-200°C for 8-72 hours, preferably at 160-180°C for 10-48 hours; the drying is performed at 60-130°C for 2-12 hours, preferably at 80-120°C for 4-8 hours; the calcining is performed at 500-600°C for 2-8 hours, preferably at 530-570°C for 3-6 hours or 4-6 hours.

Compared with the prior art, the present invention has the following advantages:
According to the process for preparing the ZSM-23 zeolite provided by the present invention, all of the aluminum source required for synthesis is added in the preparation process of the amorphous silica-alumina precursor, promoting the generation of primary structural units of the zeolite; and when a template agent is added to the amorphous silica-alumina precursor, the template agent will preferentially chelate with the Al species, and then adsorb on the surface of the formed primary structural unit, achieving the pre-assembly of the zeolite structure and generating a large number of crystal nuclei; At the same time, it can better control the binding sites of Al atoms, which is conducive to the later crystallization to produce ZSM-23 with more weak and mid-strong acid sites. After the supplemental silicon source is added to form the final gel, a large number of crystal nuclei can rapidly grow into the ZSM-23 zeolite with high crystallinity and small crystal size after the static crystallization. In addition, the process of the present invention expands the synthesis silica-alumina ratio range of the ZSM-23, shortens the crystallization time of the zeolite, reduces the amount of the template agent used in the synthesis process of the ZSM-23 zeolite, and produces the zeolite product with excellent performances. It is a green and feasible industrial production route.

The ZSM-23 zeolite synthesized by the process of the present invention has high crystallinity, smaller grain size, more weak and mid-strong acids, low strong acid content, and good thermal and hydrothermal stability, making it an excellent adsorbent or catalytic material.

### Brief description of the drawings

Figure 1 shows the XRD spectrum of the synthesized product of the present invention.
Figure 2 is a scanning electron microscope image of the synthesized product of the present invention.

### Detailed description

### Analysis methods according to the present invention:

The specific surface area and the pore volume are measured with the low-temperature liquid nitrogen physical adsorption method by using the ASAP 2405 physical adsorption instrument from Micromeritics Corporation (USA).

The silica-alumina molar ratio is determined by chemical analysis.

The XRD spectra of the samples are obtained by using the Dmax2500 X-ray diffractometer produced by Rigaku Corporation (Japan). The relative crystallinity of the zeolite is determined by X-ray powder diffraction (XRD), specifically by taking the sum of the heights of diffraction peaks expressed by 2θ degree of approximately 11.3° and 19.5-23° in the XRD spectrum of a conventional ZSM-23 zeolite as 100% crystallinity and comparing with that of other samples to obtain the relative crystallinity.

According to the present invention, the ZSM-23 zeolite has an XRD pattern comprising the following characteristic peaks expressed by 2θ degree: about 11.3°+/-0.3° (for example +/-0.2° or +/-0.1°).

According to the present invention, the ZSM-23 zeolite has an XRD pattern comprising the following characteristic peaks expressed by 2θ degree: 11.2-11.5°, 19.5-19.9°, 20.7-21.0°, and 22.8-23.1°.

The grain size was obtained with JSM-7500F field emission scanning electron microscopy from JEOL Company (Japan).

The acid distribution (including total acid amount and strong acid content) was measured with NH3 temperature-programmed desorption (NH3-TPD), where the amount of the acid having a desorption temperature of 350°C or higher was taken as the strong acid amount.

In the present invention, the acid amount is calculated as H⁺.

In the present invention, wt% is the mass fraction and v% is the volume fraction.

In order to better illustrate the present invention, the present invention is further described below in conjunction with Examples and Comparative Examples. But the scope of the present invention is not limited to the scope of these examples.

### Example 1

A sodium aluminate working solution (40g Al₂O₃/L) was prepared. A sodium silicate solution having a SiO₂ concentration of 28wt% was diluted to a sodium silicate working solution (100g SiO₂/L). 150mL of the sodium aluminate working solution was placed in a gel-forming tank. Then 50mL of the sodium silicate working solution was added. The reaction temperature was controlled to 20°C, and a CO₂ gas with a concentration of 50 v% was introduced. When the pH value reached 10.0, the introduction of CO₂ was terminated. Then 90mL of the sodium silicate working solution was added, and then the remaining CO₂ gas was introduced for stabilization. The system was aged at 25°C for 30 minutes to produce an amorphous silica-alumina precursor. Based on the total charging molar ratio of SiO₂:Al₂O₃:Na₂O:H₂O = 1:0.02:0.04:45, and IPA/SiO₂ = 0.7 (IPA: isopropylamine as the template agent), to the above resulting amorphous silica-alumina precursor was added isopropylamine. The resulting mixture was stirred at 15°C for 0.8 hours to produce a mixed solution containing the amorphous silica-alumina precursor and the template agent. Then to the mixed solution was added a mixture composed of sodium hydroxide, silica sol, and water. The resulting mixture was stirred to be uniform to produce a silica-alumina gel.

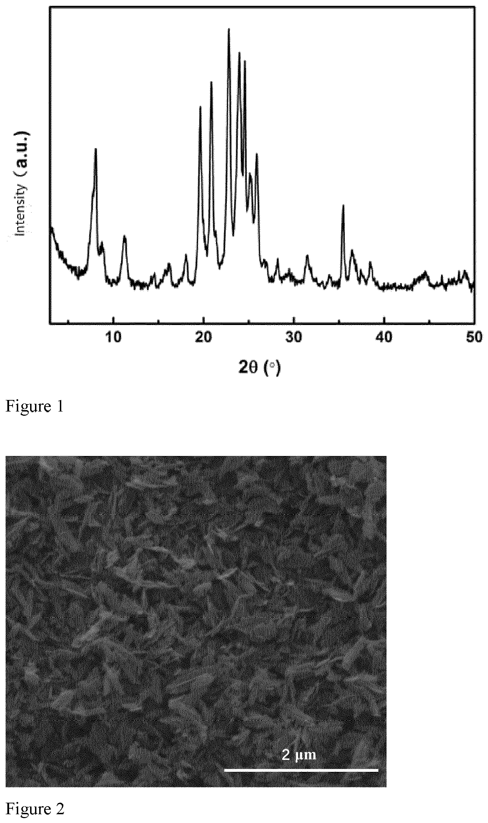

The above-obtained gel was poured into a stainless steel reaction vessel, and statically crystallized at 160°C for 20 hours. After the completion of crystallization, the crystallization system was filtered, washed to neutral, and dried at 120°C to obtain a zeolite product named ZSM-23-1; the obtained ZSM-23-1 was calcined in air at 550°C for 3 hours to measure its relative crystallinity after calcination, and hydrothermally treated with steam for 2 hours at 600°C to measure its hydrothermal stability. The specific properties were shown in Table 1. Figure 1 showed the XRD spectrum of the zeolite, and Figure 2 showed the scanning electron microscopy image of the zeolite, confirming that the obtained zeolite was a ZSM-23 zeolite.

### Example 2

A sodium aluminate working solution (40g Al₂O₃/L) was prepared. A sodium silicate solution having a SiO₂ concentration of 28wt% was diluted to a sodium silicate working solution (150g SiO₂/L). 200mL of the sodium aluminate working solution was placed in a gel-forming tank. Then 40mL of the sodium silicate working solution was added. The reaction temperature was controlled to 25°C, and a CO₂ gas with a concentration of 50 v% was introduced. When the pH value reached 10.5, the introduction of CO₂ was terminated. Then 40mL of the sodium silicate working solution was added, and then the remaining CO₂ gas was introduced for stabilization. The system was aged at 20°C for 20 minutes to produce an amorphous silica-alumina precursor. Based on the total charging molar ratio of SiO₂:Al₂O₃:Na₂O:H₂O = 1:0.005:0.04:60, and IPA/SiO₂ = 0.15, to the above resulting amorphous silica-alumina precursor was added isopropylamine. The resulting mixture was stirred at 20°C for 1 hour to produce a mixed solution containing the amorphous silica-alumina precursor and the template agent. Then to the mixed solution was added a mixture composed of sodium hydroxide, silica sol, and water. The resulting mixture was stirred to be uniform to produce a silica-alumina gel.

The above-obtained gel was poured into a stainless steel reaction vessel, and statically crystallized at 180°C for 18 hours. After the completion of crystallization, the crystallization system was filtered, washed to neutral, and dried at 120°C to obtain a zeolite product named ZSM-23-2; the obtained ZSM-23-2 was calcined in air at 550°C for 3 hours to measure its relative crystallinity after calcination, and hydrothermally treated with steam for 2 hours at 600°C to measure its hydrothermal stability. The specific properties were shown in Table 1. Its XRD spectrum was similar to Figure 1, and its scanning electron microscope image was similar to Figure 2.

### Example 3

A sodium aluminate working solution (50g Al₂O₃/L) was prepared. A sodium silicate solution having a SiO₂ concentration of 28wt% was diluted to a sodium silicate working solution (100g SiO₂/L). 200mL of the sodium aluminate working solution was placed in a gel-forming tank. Then 60mL of the sodium silicate working solution was added. The reaction temperature was controlled to 30°C, and a CO₂ gas with a concentration of 50 v% was introduced. When the pH value reached 10.0, the introduction of CO₂ was terminated. Then 40mL of the sodium silicate working solution was added, and then the remaining CO₂ gas was introduced for stabilization. The system was aged at 35°C for 15 minutes to produce an amorphous silica-alumina precursor. Based on the total charging molar ratio of SiO₂:Al₂O₃:Na₂O:H₂O = 1:0.01:0.04:30, and IPA/SiO₂ = 0.4, to the above resulting amorphous silica-alumina precursor was added isopropylamine. The resulting mixture was stirred at 25°C for 0.5 hours to produce a mixed solution containing the amorphous silica-alumina precursor and the template agent. Then to the mixed solution was added a mixture composed of sodium hydroxide, silica sol, and water. The resulting mixture was stirred to be uniform to produce a silica-alumina gel.

The above-obtained gel was poured into a stainless steel reaction vessel, and statically crystallized at 160°C for 24 hours. After the completion of crystallization, the crystallization system was filtered, washed to neutral, and dried at 120°C to obtain a zeolite product named ZSM-23-3; the obtained ZSM-23-3 was calcined in air at 550°C for 6 hours to measure its relative crystallinity after calcination, and hydrothermally treated with steam for 2 hours at 600°C to measure its hydrothermal stability. The specific properties were shown in Table 1. Its XRD spectrum was similar to Figure 1, and its scanning electron microscope image was similar to Figure 2.

### Example 4

A sodium aluminate working solution (20g Al₂O₃/L) was prepared. A sodium silicate solution having a SiO₂ concentration of 28wt% was diluted to a sodium silicate working solution (150g SiO₂/L). 300mL of the sodium aluminate working solution was placed in a gel-forming tank. Then 20mL of the sodium silicate working solution was added. The reaction temperature was controlled to 30°C, and a CO₂ gas with a concentration of 50 v% was introduced. When the pH value reached 11.0, the introduction of CO₂ was terminated. Then 20mL of the sodium silicate working solution was added, and then the remaining CO₂ gas was introduced for stabilization. The system was aged at 20°C for 30 minutes to produce an amorphous silica-alumina precursor. Based on the total charging molar ratio of SiO₂:Al₂O₃:Na₂O:H₂O = 1:0.01:0.04:45, and IPA/SiO₂ = 0.3, to the above resulting amorphous silica-alumina precursor was added isopropylamine. The resulting mixture was stirred at 15°C for 1 hour to produce a mixed solution containing the amorphous silica-alumina precursor and the template agent. Then to the mixed solution was added a mixture composed of sodium hydroxide, silica sol, and water. The resulting mixture was stirred to be uniform to produce a silica-alumina gel.

The above-obtained gel was poured into a stainless steel reaction vessel, and statically crystallized at 180°C for 24 hours. After the completion of crystallization, the crystallization system was filtered, washed to neutral, and dried at 120°C to obtain a zeolite product named ZSM-23-4; the obtained ZSM-23-4 was calcined in air at 550°C for 4 hours to measure its relative crystallinity after calcination, and hydrothermally treated with steam for 2 hours at 600°C to measure its hydrothermal stability. The specific properties were shown in Table 1. Its XRD spectrum was similar to Figure 1, and its scanning electron microscope image was similar to Figure 2.

### Example 5

A sodium aluminate working solution (40g Al₂O₃/L) was prepared. A sodium silicate solution having a SiO₂ concentration of 28wt% was diluted to a sodium silicate working solution (50g SiO₂/L). 150mL of the sodium aluminate working solution was placed in a gel-forming tank. Then 140mL of the sodium silicate working solution was added. The reaction temperature was controlled to 25°C, and a CO₂ gas with a concentration of 50 v% was introduced. When the pH value reached 10.0, the introduction of CO₂ was terminated. Then 140mL of the sodium silicate working solution was added, and then the remaining CO₂ gas was introduced for stabilization. The system was aged at 25°C for 20 minutes to produce an amorphous silica-alumina precursor. Based on the total charging molar ratio of SiO₂:Al₂O₃:Na₂O:H₂O = 1:0.01:0.04:45, and IPA/SiO₂ = 0.4, to the above resulting amorphous silica-alumina precursor was added isopropylamine. The resulting mixture was stirred at 15°C for 1 hour to produce a mixed solution containing the amorphous silica-alumina precursor and the template agent. Then to the mixed solution was added a mixture composed of sodium hydroxide, fumed silica, and water. The resulting mixture was stirred to be uniform to produce a silica-alumina gel. The above-obtained gel was poured into a stainless steel reaction vessel, and statically crystallized at 180°C for 12 hours. After the completion of crystallization, the crystallization system was filtered, washed to neutral, and dried at 120°C to obtain a zeolite product named ZSM-23-5; the obtained ZSM-23-5 was calcined in air at 550°C for 3 hours to measure its relative crystallinity after calcination, and hydrothermally treated with steam for 2 hours at 600°C to measure its hydrothermal stability. The specific properties were shown in Table 1. Its XRD spectrum was similar to Figure 1, and its scanning electron microscope image was similar to Figure 2.

### Example 6

A sodium aluminate working solution (40g Al₂O₃/L) was prepared. A sodium silicate solution having a SiO₂ concentration of 28wt% was diluted to a sodium silicate working solution (50g SiO₂/L). 150mL of the sodium aluminate working solution was placed in a gel-forming tank. Then 140mL of the sodium silicate working solution was added. The reaction temperature was controlled to 25°C, and a CO₂ gas with a concentration of 50 v% was introduced. When the pH value reached 10.0, the introduction of CO₂ was terminated. Then 140mL of the sodium silicate working solution was added, and then the remaining CO₂ gas was introduced for stabilization. The system was aged at 25°C for 20 minutes to produce an amorphous silica-alumina precursor. Based on the total charging molar ratio of SiO₂:Al₂O₃:Na₂O:H₂O = 1:0.01:0.04:45, and SDA(structure-directing agent)/SiO₂ = 0.1, to the above resulting amorphous silica-alumina precursor was added pyrrolidine (SDA). The resulting mixture was stirred at 15°C for 1 hour to produce a mixed solution containing the amorphous silica-alumina precursor and the template agent. Then to the mixed solution was added a mixture composed of sodium hydroxide, fumed silica, and water. The resulting mixture was stirred to be uniform to produce a silica-alumina gel.

The above-obtained gel was poured into a stainless steel reaction vessel, and statically crystallized at 180°C for 12 hours. After the completion of crystallization, the crystallization system was filtered, washed to neutral, and dried at 120°C to obtain a zeolite product named ZSM-23-6; the obtained ZSM-23-6 was calcined in air at 550°C for 4 hours to measure its relative crystallinity after calcination, and hydrothermally treated with steam for 2 hours at 600°C to measure its hydrothermal stability. The specific properties were shown in Table 1. Its XRD spectrum was similar to Figure 1, and its scanning electron microscope image was similar to Figure 2.

### Comparative Example 1 (according to CN101214971A)

An aluminum source, a silicon source, an alkali source, isopropylamine and H₂O were prepared and mixed based on the molar ratio of Al₂O₃ in the aluminum source: SiO₂ in the silicon source:NaOH in the alkali source:isopropylamine:H₂O = 0.006:1:0.06:0.8:12, wherein the aluminum source was sodium aluminate, the silicon source was silica sol, and the alkali source was sodium hydroxide, to produce a reaction mixture. Firstly, the aluminum source was added to an aqueous solution of sodium hydroxide and the resulting mixture was uniformly stirred; the silicon source was added and the resulting mixture was uniformly stirred; and then isopropylamine was added and the resulting mixture was uniformly stirred to produce a reaction mixture. The obtained reaction mixture was transferred to a high-pressure reaction vessel for a hydrothermal crystallization at 170°C for 3 days. Then the resulting mixture was filtered, washed to neutral, and dried at 120°C to obtain a zeolite product named CNZSM-23-1; the obtained CNZSM-23-1 was calcined in air at 550°C for 3 hours to measure its relative crystallinity after calcination, and hydrothermally treated with steam for 2 hours at 600°C to measure its hydrothermal stability. The specific properties were shown in Table 1.

### Comparative Example 2 (according to CN102992346A)

8.12g of H₂O and 0.092g of aluminum sulfate were uniformly mixed. To the resulting mixture was added 0.38g of NaOH. Then to the resulting mixture was added 3.32g of silica sol with a silica content of 30.5% under stirring. The stirring was continued until the solution becomes uniform. Then 10% ZSM-23 zeolite was added as crystal seed (the amount of crystal seed was calculated based on the mass percentage of the added SiO₂). The reaction raw materials were added to the PTFE stainless steel reactor, and dynamically crystallized at 160°C for 10 hours. The resulting product were filtered by suction and dried to obtain the product. The ratio of reaction raw materials was SiO₂:0.008319Al₂O₃:0.27Na₂O:35H₂O. The product was named CNZSM-23-2, which was calcined in air at 550°C for 3 hours to measure its relative crystallinity after calcination, and hydrothermally treated with steam for 2 hours at 600°C to measure its hydrothermal stability. The specific properties were shown in Table 1.

### Comparative Example 3

A sodium aluminate working solution (50g Al₂O₃/L) was prepared. A sodium silicate solution having a SiO₂ concentration of 28wt% was diluted to a sodium silicate working solution (100g SiO₂/L). 200mL of the sodium aluminate working solution was placed in a gel-forming tank. Then 60mL of the sodium silicate working solution was added. The reaction temperature was controlled to 30°C, and a CO₂ gas with a concentration of 50 v% was introduced. When the pH value reached 10.0, the introduction of CO₂ was terminated. Then 40mL of the sodium silicate working solution was added, and then the remaining CO₂ gas was introduced for stabilization. The system was aged at 25°C for 30 minutes to produce an amorphous silica-alumina precursor. Based on the total charging molar ratio of SiO₂:Al₂O₃:Na₂O:H₂O = 1:0.01:0.04:30, and IPA/SiO₂ = 0.4, to the above resulting amorphous silica-alumina precursor was added a mixture composed of sodium hydroxide, silica sol, isopropylamine, and water. The resulting mixture was stirred to be uniform to produce a silica-alumina gel.

The above-obtained gel was poured into a stainless steel reaction vessel, and statically crystallized at 160°C for 24 hours. After the completion of crystallization, the crystallization system was filtered, washed to neutral, and dried at 120°C to obtain a zeolite raw powder named CZSM-23-3, which was measured for its relative crystallinity; the obtained CZSM-23-3 was calcined in air at 550°C for 3 hours to measure its relative crystallinity after calcination, and hydrothermally treated with steam for 2 hours at 600°C to measure its hydrothermal stability. The specific properties were shown in Table 1.

### Comparative example 4

Solid aluminum sulfate was diluted to 60mL of an aluminum sulfate working solution (a) with a concentration of 100g Al₂O₃/L. Concentrated ammonia water was added to an appropriate amount of distilled water and diluted to a diluted ammonia water (b) with a concentration of about 10wt%. A sodium silicate solution containing 28wt% of SiO₂ was diluted to 140mL of a sodium silicate working solution (c) having a concentration of 100g SiO₂/L. To a 5-liter steel reaction tank was added 0.5 liters of distilled water, stirred and heated to 70°C. The valves of the containers containing (a), (b), and (c) were opened respectively, the flow rate of (a) was controlled so as to maintain a neutralization reaction time of 40 minutes, and then the flow rate of (b) was quickly adjusted to maintain the pH value of the system at 7-8, and the temperature of the system was controlled at around 60°C. After the reaction of aluminum sulfate was completed, the addition of (b) was terminated, and the formed silica-alumina sol was aged at 25°C for 40 minutes. Based on the total charging molar ratio of SiO₂:Al₂O₃:Na₂O:H₂O = 1:0.02:0.04:45, IPA/SiO₂ = 0.7, to the above resulting amorphous silica-alumina precursor was added isopropylamine. The resulting mixture was stirred at 15°C for 0.8 hours to produce a mixed solution containing the amorphous silica-alumina precursor and the template agent. Then to the mixed solution was added a mixture composed of sodium hydroxide, silica sol, and water. The resulting mixture was stirred to be uniform to produce a silica-alumina gel.

The above-obtained gel was poured into a stainless steel reaction vessel, and statically crystallized at 180°C for 36 hours. Then, the crystallization system was filtered, washed to neutral, and dried at 120°C to obtain a zeolite named CZSM-23-4, which was measured for its relative crystallinity; the obtained CZSM-23-4 was calcined in air at 550°C for 3 hours to measure its relative crystallinity after calcination, and hydrothermally treated with steam for 2 hours at 600°C to measure its hydrothermal stability. The specific properties were shown in Table 1.

### Comparative Example 5 (Preparation of the conventional ZSM-23 zeolite)

Water glass, aluminum sulfate, isopropylamine (IPA), sodium hydroxide and water were mixed to produce a gel with a total molar ratio of SiO₂ in the silicon source:Al₂O₃ in the aluminum source:NaOH:IPA:H₂O = 1:0.01:0.08:1.0:50. The resulting gel was heated at 180°C for 72 hours, filtered, washed, dried, and calcined. The resulting product was measured for its relative crystallinity; and measured for its hydrothermal stability after a hydrothermal treatment with steam for 2 hours at 600°C.

**Table 1**

| | SiO₂/Al₂O₃ charging molar ratio | Specific surface area, m²/g | Pore volume, cm³/g | Grain size, nm | Actual SiO₂/Al₂O₃ molar ratio | Relative crystallinity,% | Relative crystallinity after calcination,% | Relative crystallinity after hydrothermal treatment,% | Total acid amount, mmol/g | Strong acid content,% |
|---|---|---|---|---|---|---|---|---|---|---|
| Example 1 | 50 | 355 | 0.35 | about 360 | 42 | 98 | 101 | 103 | 0.187 | 33.0 |
| Example 2 | 200 | 344 | 0.32 | about 420 | 196 | 104 | 102 | 105 | 0.058 | 106 |
| Example 3 | 100 | 334 | 0.30 | about 490 | 89 | 112 | 115 | 108 | 0.111 | 24.2 |
| Example 4 | 100 | 348 | 0.32 | about 450 | 91 | 100 | 105 | 104 | 0.106 | 21.7 |
| Example 5 | 100 | 363 | 0.37 | about 320 | 87 | 109 | 108 | 102 | 0.109 | 18.9 |
| Example 6 | 100 | 352 | 0.36 | about 470 | 89 | 105 | 104 | 101 | 0.107 | 20.5 |
| Comparative Example 1 | 167 | 323 | 0.31 | about 1300 | 145 | 100 | 106 | 104 | 0.069 | 63.3 |
| Comparative Example 2 | 120 | 288 | 0.28 | about 1000 | 117 | 104 | 102 | 104 | 0.083 | 68.2 |
| Comparative Example 3 | 100 | 216 | 0.22 | about 610 | 92 | 101 | 103 | 101 | 0.104 | 52.4 |
| Comparative Example 4 | 50 | 51 | 0.04 | ^{_a} | ^{_a} | ^{_a} | ^{_a} | ^{_a} | ^{_a} | ^{_a} |
| Comparative Example 5 | | 228 | 0.24 | | | | 100 | 101 | | |

| | | | | | | | | | | |
|---|---|---|---|---|---|---|---|---|---|---|
| a: Under this condition, the zeolite product was not produced through crystallization, so this property could not be analyzed. | | | | | | | | | | |

It can be seen from the data in Table 1 that the preparation processes in the examples of the present invention could synthesize ZSM-23 zeolites having high crystallinity, wider silica-alumina ratio range, relatively small crystal grains, relatively high content of weak acid and mid-strong acid, and good thermal stability and hydrothermal stability.

The performance of ZSM-23 zeolite samples was evaluated on a fixed bed micro reactor. The reaction conditions and catalytic results of Comparative Example 1 and Example 3 in the linear C₂₀-C₃₀ hydroisomerization reaction were as follows:
Reaction raw materials: 90wt% decahydronaphthalene, 10wt% C₂₀-C₃₀ straight chain alkanes;
Reaction conditions: reaction temperature 280°C; Liquid hourly space velocity 1.0 h⁻¹;
Hydrogen to oil ratio 600; Reaction hydrogen pressure 4.0 MPa;

Comparative Example 3: liquid yield (C₅⁺): 93%; C₂₀-C₃₀Isomerization degree: 100%; C₂₀-C₃₀isomerization product yield: 42%; Ratio of multiple-branched chain components to single-branched chain components in C₂₀-C₃₀ isomerization product:0.4.

Example 3: liquid yield (C₅⁺): 96%; C₂₀-C₃₀Isomerization degree: 100%; C₂₀-C₃₀isomerization product yield: 58%; Ratio of multiple-branched chain components to single-branched chain components in C₂₀-C₃₀ isomerization product: 2.8.

## Claims

1. A ZSM-23 zeolite, which is **characterized in that** the total acid amount of said ZSM-23 zeolite is 0.05-0.25 mmol/g, preferably, 0.06-0.22 mmol/g, more preferably, 0.06-0.20 mmol/g; the strong acid content of said ZSM-23 zeolite is 5-33%, preferably, 7-33%, more preferably, 9-33%, or further preferably, 7-31%, further more preferably, 10-28% of the total acid amount; wherein the strong acid refers to an acid having a desorption temperature of 350°C or higher in an NH3 temperature programmed desorption (NH3-TPD), wherein optionally said ZSM-23 zeolite is a dried and calcined zeolite.

2. The zeolite according to any of the previous claims, which is **characterized in that** the ZSM-23 zeolite has a grain size of 100-700 nm, preferably 200-600 nm, and further preferably 300-500 nm.

3. The zeolite according to any of the previous claims, which is **characterized in that** said ZSM-23 zeolite has a SiO₂/Al₂O₃ molar ratio of 35-300, a specific surface area of 200-400 m²/g, and a pore volume of 0.25-0.50 cm³/g; preferably, said ZSM-23 zeolite has a SiO₂/Al₂O₃ molar ratio of 38-200, a specific surface area of 280-370 m²/g, and a pore volume of 0.28-0.40 cm³/g.

4. The zeolite according to any of the previous claims, which is **characterized in that** said ZSM-23 zeolite has a relative crystallinity of 95-130% after calcination, and a relative crystallinity of 93-120% after a hydrothermal treatment with steam for 2 hours at 600°C; preferably a relative crystallinity of 98-120% after calcination, and a relative crystallinity of 95-115% after a hydrothermal treatment with steam for 2 hours at 600°C.

5. A process for preparing said ZSM-23 zeolite according to any of the precedent claims, which is **characterized in that** the process comprises the following steps:
(1) A mixed solution containing a template agent, and an amorphous silica-alumina and/or amorphous silica-alumina precursor is prepared, preferably, the amorphous silica-alumina and/or amorphous silica-alumina precursor is derived from an alkaline aluminum source (for example, an aluminate or a meta-aluminate, such as sodium aluminate, potassium aluminate, sodium meta-aluminate, and potassium meta-aluminate);
(2) An alkali source and a silicon source are added to the mixed solution of step (1);
(3) The material obtained in step (2) is crystallized, optionally filtered and washed, dried, and optionally calcined to produce the ZSM-23 zeolite.

6. The process according to claim 5, which is **characterized in that** in step (1), said template agent is one or more of isopropylamine, pyrrolidine, N,N-dimethyl formamide, and dimethylamine.

7. The process according to any of claims 5-6, which is **characterized in that** in step (1), in said mixed solution the molar ratio of silicon (as silica) : aluminum (as alumina) is 1:(0.10-0.85), preferably 1:(0.20-0.79), further preferably 1:(0.24-0.78); the molar ratio of said aluminum (as alumina) : the template agent is 1:(10-100), preferably 1:(15-85), further preferably 1:(20-65).

8. The process according to any one of claims 5-7, which is **characterized in that** in step (1), an amorphous silica-alumina precursor is prepared by carbonization method, and then a template agent is added to the amorphous silica-alumina precursor to produce the mixed solution.

9. The process according to any one of claims 5-8, which is **characterized in that** the preparation process of the amorphous silica-alumina precursor in step (1) is as follows: preparing a solution of an aluminum source (such as aluminate, preferably sodium aluminate) and a solution of a silicon-containing compound respectively; mixing the solution of the aluminum source with a part of the solution of the silicon-containing compound, introducing a CO₂ gas for gelatination, when the volume of the introduced CO₂ gas is 50-100%, preferably 70-90% of the total volume of the introduced CO₂ gas, adding the remaining part of the solution of the silicon-containing compound, and optionally aging to produce the amorphous silica-alumina precursor.

10. The process according to claim 9, which is **characterized in that** the remaining part of the solution of the silicon-containing compound as silica comprises 5-85wt%, preferably 30-70wt% of the total addition amount of the solution of the silicon-containing compound as silica.

11. The process according to any of claims 9-10, which is **characterized in that** the reaction temperature of said gelatination is 10-40°C, preferably 15-35°C, the pH after the gelatination is controlled to 9-12.

12. The process according to any of claims 9-11, which is **characterized in that** said solution of the silicon-containing compound is water glass and/or a sodium silicate solution.

13. The process according to any of claims 9-12, which is **characterized in that** based on the mass of Al₂O₃, the concentration of the solution of the aluminum source is 15-60 gAl₂O₃/L, based on the mass of SiO₂, the concentration of said solution of the silicon-containing compound is 40-260 gSiO₂/L, the concentration of said CO₂ gas is 30-60 v%.

14. The process according to any of claims 9-13, which is **characterized in that** the time of said ageing is 5-60 minutes, preferably 10-30 minutes; the temperature of said aging is 10-40°C, preferably 15-35°C.

15. The process according to any of claims 5-14, which is **characterized in that** in step (1), said mixed solution is stirred at 10-35°C for 0.2-1.5 hours, preferably stirred at 10-25°C for 0.5-1 hours.

16. The process according to any of claims 5-15, which is **characterized in that** in step (2), based on the aluminum (as alumina) in the mixed solution of step (1), based on the total charging molar ratios of SiO₂:Al₂O₃:R₂O(an alkali source, wherein R is an alkali metal, such as sodium and potassium):H₂O = 1:(0.0025-0.025):(0.015-0.08):(30-80) and template agent (SDA)/SiO₂ = 0.10-1.8, preferably SiO₂/Al₂O₃ is 50-200, H₂O/SiO₂ is 30-60, and R₂O/SiO₂ is 0.025-0.06, the alkali source and the silicon source are added to step (1).

17. The process according to any of claims 5-16, which is **characterized in that** in step (2), said silicon source is one or more of fumed silica, silica sol and water glass, said alkali source is one or more of sodium hydroxide, potassium hydroxide, and ammonia water.

18. The process according to any of claims 5-17, which is **characterized in that** in step (3), the crystallization is performed at 150-200°C for 8-72 hours, preferably at 160-180°C for 10-48 hours; the drying is performed at 60-130°C for 2-12 hours, preferably at 80-120°C for 4-8 hours; the calcining is performed at 500-600°C for 2-8 hours, preferably at 530-570°C for 3-6 hours or 4-6 hours.
